Europäisches Patentamt

(19) European Patent Office

Office européen des brevets

(11) Numéro de publication: **0 064 068**
**B1**

(12) **FASCICULE DE BREVET EUROPEEN**

(45) Date de publication du fascicule du brevet:
18.07.84

(21) Numéro de dépôt: **81903014.9**

(22) Date de dépôt: **06.11.81**

(86) Numéro de dépôt international:
**PCT/CH 81/00120**

(87) Numéro de publication internationale:
**WO 82/01495 (13.05.82 Gazette 82/12)**

(51) Int. Cl.³: **B 23 P 1/08**

(54) **DISPOSITIF POUR ORIENTER UNE TETE DE GUIDAGE D'UNE MACHINE A DECOUPER PAR ELECTRO-EROSION.**

(30) Priorité: **06.11.80 CH 8237/80**

(43) Date de publication de la demande:
**10.11.82 Bulletin 82/45**

(45) Mention de la délivrance du brevet:
**18.07.84 Bulletin 84/29**

(84) Etats contractants désignés:
**AT DE FR GB LU NL SE**

(56) Documents cités:
**FR - A - 2 366 094**
**US - A - 4 250 371**

(73) Titulaire: **ATELIERS DES CHARMILLES S.A., 109 rue de Lyon, CH-1203 Genève (CH)**

(72) Inventeur: **BONGA, Benno Ibo, Ch. des Vignettes, CH-1299 Crans (CH)**

(74) Mandataire: **Ardin, Pierre et al, PIERRE ARDIN & CIE 22, rue du Mont-Blanc, CH-1211 Genève 1 (CH)**

BUNDESDRUCKEREI BERLIN

## Description

On connaît déjà des dispositifs pour orienter une tête d'injection et de guidage d'une électrode-fil dans une machine à découper une électrode-pièce par décharges électrique érosives, cette machine comprenant un support pour la tête de guidage de l'électrode-fil, un support our la pièce à découper, des moyens pour produire un déplacement relatif entre ces supports de manière à obtenir la forme désirée de la découpe, une table à mouvements croisés portant la tête de guidage et montée sur le support correspondant, deux vis entraînées chacune par un moteur pour commander les déplacements de la table respectivement dans deux directions transversales à l'axe longitudinal du fil, et des moyens pour orienter cette tête de guidage à partir de ces déplacement transversaux suivant l'axe de la portion de fil comprise dans la zone d'usinage.

Un dispositif de ce genre est décrit par exemple dans le brevet français 2 454 869. Ces dispositifs sont en général relativement compliqués et font appel à des moyens électroniques pour le calcul de l'orientation à donner à la tête de guidage.

La présente invention a pour but de fournir un dispositif d'orientation d'une tête de guidage, de construction simple et compacte, dans lequel l'orientation correcte de la tête est obtenue par une disposition purement mécanique à partir de la commande des déplacements de la table à mouvements croisés.

A cet effet, le dispositif selon l'invention est caractérisé en ce que chacune de ces vis comporte un second filetage ayant un pas différent de celui utilisé pour déplacer la table, ce second filetage étant prévu pour déplacer un écrou dans la même direction que celle de la table mais à une vitesse différente, un dispositif de liaison mécanique étant prévu entre l'écrou et la tête de guidage de manière à maintenir la tête de guidage dans l'axe de ladite portion de fil.

Le dessin annexé représente schématiquement et à titre d'exemple une forme d'exécution de l'objet de l'invention.

La fig. 1 est une vue explicative.

La fig. 2 est une vue latérale d'une machine à électro-érosion.

La fig. 3 est une coupe à plus grande échelle d'une partie de la machine selon la fig. 2.

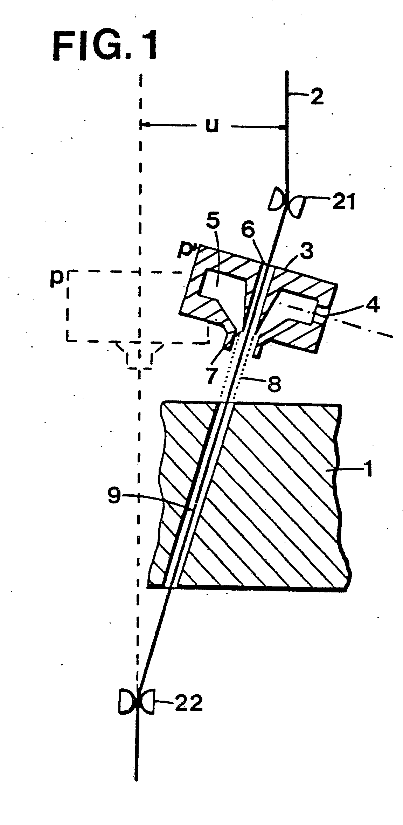

La fig. 1 montre une pièce-électrode 1 à découper au moyen d'une électrode-fil 2 passant sur deux guides 21 et 22 disposés de part et d'autre de la pièce 1. Une buse 3 est disposée de façon à entourer le fil 2. Cette buse présente une entrée 4 pour l'amenée d'un fluide diélectrique, cette entrée aboutissant à une chambre annulaire 5 entourant un passage 6 pour le fil 2. Le fluide amené dans la chambre 5 s'échappe par un passage annulaire 7 pour former un jet 8 entourant le fil et dirigé en direction de la zone d'usinage 9. L'ensemble de la buse 3 et du guide 21 constituent une tête de guidage et d'injection.

Lorsque le guide supérieur est dans la position P, la buse 3 occupe la position représentée en traits interrompus. Lorsque le guide est déplacé d'une distance U pour passer de la position P à la position P', la buse doit présenter une inclinaison correspondant à celle du fil, afin que le jet de fluide d'usinage reste coaxial au fil.

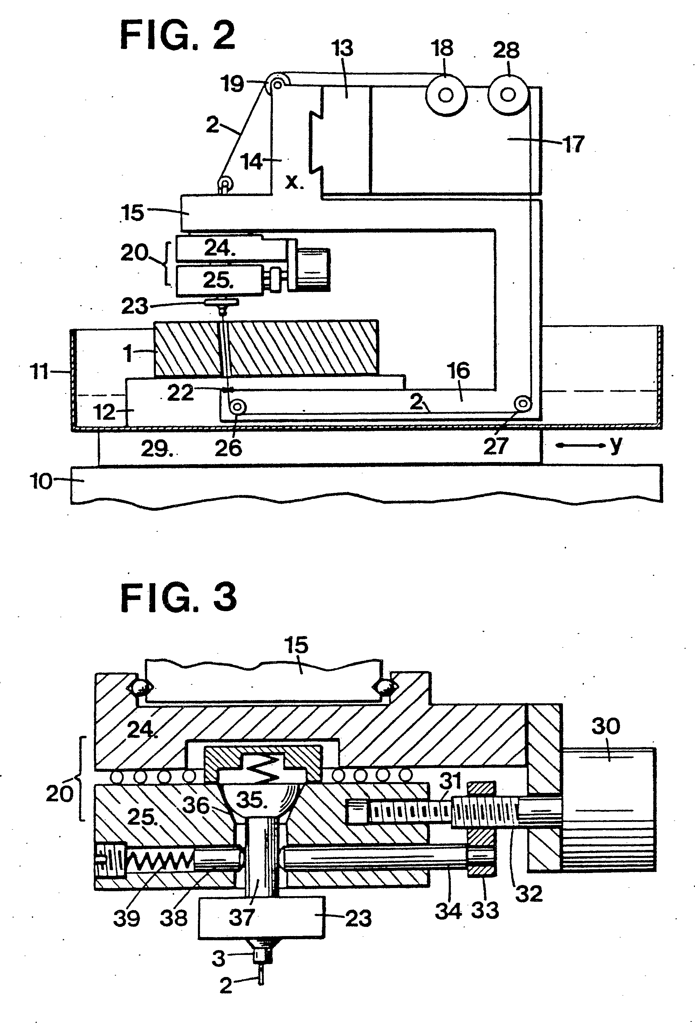

La fig. 2 est une vue latérale avec coupes partielles d'une machine à découper par électro-érosion. Cette machine comprend un bâti 10 portant une cuve 11 dans laquelle le pièce 1 est fixée sur des supports 12. Le bâti 10 porte une traverse 13 formant coulisse pour une pièce 14 de guidage de l'électrode-fil 2. Cette pièce 14, en forme d'étrier présente un bras supérieur 15 et un bras inférieur 16.

Un magasin 17 porte une bobine débitrice 18 fournissant le fil 2 qui constitue l'électrode pour le découpage de la pièce 1. Ce fil passe sur des galets 19, puis dans un support 20 pour la tête d'injection et de guidage 23 qui est constitué, comme illustré schématiquement à la fig. 1 par un ensemble d'une buse 3 et d'un guide 21. Le support constitue une table à mouvements croisés 20 comprenant deux plateaux 24 et 25 déplaçables dans deux directions non confondues, généralement orthogonales entre elles. Cette table permet de déplacer la tête 23 par rapport au bras 15 pour donner au fil 2, dans la zone d'usinage 9, toute inclinaison désirée, ceci dans le but d'obtenir des découpes à parois inclinées.

Après passage sur le guide inférieur 22, le fil 2 passe sur des galets 26 et 27 pour venir s'enrouler sur une bobine réceptrice 28 portée par le magasin 17. Des moyens conventionnels permettent de déplacer un support 29 de la cuve 11 dans une direction Y et la pièce 14 sur la traverse glissière 13 dans une direction X perpendiculaire au plan du dessin, la combinaison de ces deux déplacements permettant d'obtenir la trajectoire désirée pour la découpe de la pièce 1.

La fig. 3 montre en coupe les moyens permettant d'incliner la tête 23 de guidage et d'injection en fonction des déplacements relatifs des plateaux 24 et 25 de la table à mouvements croisés. Le déplacement du plateau 25 par rapport au plateau 24 est commandé par un moteur 30, par exemple du type pas à pas, qui est fixé au plateau 24 et dont l'arbre porte une portion filetée 31 engagée dans un alésage fileté du plateau 25. L'arbre du moteur porte une seconde portion filetée 32 sur laquelle est monté un écrou 33 solidaire d'une tige 34 coulissant dans un alésage du plateau 25. La tête 23 est montée sur un support comprenant une portion 35 en forme de rotule engagée dans un alésage conique 36 pour constituer un joint universel permettant à la tête de prendre des inclinaisons variées par rapport à une perpendiculaire au plateau 25. La partie cylindrique 37 du support de la tête 23 est soumise à l'action d'un piston 38 poussé par un ressort 39 pour maintenir cette partie 37 appuyée contre la tige 34.

Les pas des portions filetées 31 et 32 sont différents, de sorte que pour tout déplacement du plateau 25 par rapport au plateau 24 on obtient un déplacement relatif de la tige 34 par rapport au plateau 25. La différence des pas des filetages et la distance entre le centre de rotation de la partie 35 et le point d'application de la force transmise par la tige 34 sur la partie cylindrique 37 sont prévus de façon à obtenir une inclinaison de la tête 23 pour qu'elle reste orientée en direction du guide 22 au cours des déplacements du plateau 25.

Les déplacement du plateau 24 par rapport au bras supérieur 15 sont commandés par une mécanisme semblable à celui décrit pour la commande des déplacements du plateau 25 et de la tête 23. De cette façon, on obtient pour tout déplacement de la table à mouvements croisés une correction appropriée de l'orientation de la tête 23 pour qu'elle reste constamment dirigée vers le guide 22, afin que le jet de fluide soit toujours coaxial à la portion du fil 2 qui est active pour l'usinage.

Dans la forme d'exécution représentée, le guide 22 était fixe, mais il est clair que l'on pourrait le remplacer par une tête de guidage et d'injection, l'injection se faisant alors aux deux extrémités de la zone d'usinage. Dans ce cas la tête d'injection située sous la pièce 1 pourrait être reliée à la tête d'injection supérieure par des moyens mécaniques ou électriques de façon à donner à la tête dinjection inférieure une orientation correspondant à celle de la tête d'injection supérieure.

## Revendications

1. Dispositif pour orientier une tête d'injection et de guidage d'une électrode-fil (2) dans une machine à découper une électrode-pièce (1) par décharges électrique érosives, cette machine comprenant un support (20) pour la tête de guidage de l'électrode-fil, un support (12) pour la pièce à découper (1), des moyens pour produire un déplacement relatif entre ces supports de manière à obtenir la forme désirée de la découpe, une table à mouvements croisés portant la tête de guidage (23) et montée sur le support correspondant, deux vis (31) entraînées chacune par un moteur (30) pour commander les déplacements de la table (24, 25) respectivement dans deux directions transversales à l'axe longitudinal du fil, et des moyens pour orienter cette tête de guidage (23) à partir de ces déplacements transversaux suivant l'axe de la portion de fil comprise dans la zone d'usinage, caractérisé en ce que chacune de ces vis (31) comporte un second filetage (32) ayant un pas différent de celui utilisé pour déplacer la table (24, 25), ce second filetage (32) étant prévu pour déplacer un écrou (33) dans la même direction que celle de la table (24, 25) mais à une vitesse différente, un dispositif de liaison mécanique (34, 37, 38) étant prévu entre l'écrou (33) et la tête de guidage (23) de manière à maintenir la tête de guidage (23), dans l'axe de ladite portion de fil (2).

2. Dispositif selon la revendication 1, caractérisé en ce que la tête de guidage (23) est fixée à l'extrémité d'un support pivotant (37) sur la table (25) au moyen d'un joint universel (35, 36) et en ce qu'il comporte une tige transversale (34), solidaire dudit écrou (33), le support (37) étant maintenu en contact avec cette tige (34) par l'action d'un ressort (39).

## Patentansprüche

1. Vorrichtung zum Orientieren eines Injektions- und Führungskopfes eines Elektrodendrahtes (2) in einer Maschine zum funkenerosiven Drahtschneiden eines Elektrodenwerkstückes (1), wobei diese Maschine versehen ist mit einer Tragstütze (20) für den Führungskopf des Elektrodendrahtes, einer Tragstütze (12) für das zu bearbeitende Werkstück (1), mit Mitteln um eine relative Verschiebung zwischen diesen Tragstützen in der Weise zu erzeugen, um die gewünschte Schnittform zu erhalten, mit einem Kreuztisch, der den Führungskopf (23) trägt und der auf der entsprechenden Tragstütze montiert ist, zwei Schrauben (31) von denen jede von einem Motor (30) angetrieben wird, um die Verschiebungen des Kreuztisches (24, 25) jeweils in zwei zur Drahtlängsachse querlaufenden Richtungen zu steuern, und mit Mitteln um den Führungskopf (23), von diesen Querverschiebungen ausgehend, nach der Achse des sich in der Bearbeitungszone befindenden Drahtteilstückes zu richten, dadurch gekennzeichnet, daß jede dieser beiden Schrauben (31) ein zweites Schraubengewinde (32) aufweist, dessen Ganghöhe von der Ganghöhe verschieden ist, welche zur Verschiebung des Kreuztisches (24, 25) verwendet wird, wobei dieses zweite Schraubengewinde (32) dazu vorgesehen ist, eine Schraubenmutter (33) in derselben Richtung wie der Kreuztisch (24, 25) aber mit einer verschiedenen Geschwindigkeit zu verschieben, und wobei eine mechanische Verbindungsvorrichtung (34, 37, 38) in der Weise zwischen der Schraubenmutter (33) und dem Führungskopf (23) vorgesehen ist, daß der Führungskopf (23) in der Achse des benannten Drahtteilstückes (2) gehalten wird.

2. Vorrichtung nach Anspruch 1, dadurch gekennzeichnet, daß der Führungskopf (23) am Endstück einer schwenkbaren Stütze (37) auf dem Kreuztisch (25) mittels eines Kreuzgelenkes (35, 36) angebracht ist, und daß sie eine mit der benannten Schraubenmutter (33) fest verbundene Querstange (34) aufweist, wobei diese Stütze (37) unter Einwirkung einer Feder (39) mit der Querstange (34) in Berührung steht.

## Claims

1. A device for orienting an injection and guiding head for an electrode wire (2) in a machine for cutting an electrode workpiece (1) by erosive electric discharges, this machine comprising a support (20) for the guiding head of the electrode wire, a support (12) for the workpiece (1), means for producing a relative displacement between these supports such as to provide the desired form of the cut, a cross-slide table supporting the guiding head (23) and mounted on the corresponding support, two leadscrews (31) each driven by a motor (30) for controlling the displacements of the table (24, 25) respectively in two directions which are transverse to the longitudinal axis of the wire, and means for orienting this guiding head (23) from these transverse displacements, in the direction of the axis of the wire portion which is included in the machining zone, characterized in that each of these leadscrews (31) comprises a second thread (32) having a pitch different from that used for displacing the table (24, 25), this second thread (32) being provided for displacing a nut (33) in the same direction as the direction of the table (24, 25) but with a different speed, a mechanical connection device (34, 37, 38) being provided between the nut (33) and the guiding head (23) such as to maintain the guiding head (23) in the axis of the said wire portion (2).

2. A device according to claim 1, characterized in that the guiding head (23) is mounted on the end of a pivotal support (37) on the table (25) by means of a universal joint (35, 36), and in that it comprises a transverse rod (34) integral with the said nut (33), the support (37) being held in contact with this rod (34) through the action of a spring (39).

# FIG. 1

# FIG. 2

# FIG. 3

7